# EUROPEAN PATENT SPECIFICATION

(11) **EP 3 642 539 B1**
(45) Date of publication and mention of the grant of the patent: **02.06.2021**
(21) Application number: 18746092.8
(22) Date of filing: 19.06.2018
(51) Int. Cl.: F24S 10/80, F24F 5/00, F24F 12/00, F24S 10/30

(54) **AIR COLLECTOR AND METHOD FOR PROVIDING AN AIR COLLECTOR WITH A HEAT RECOVERY UNIT**
LUFTSAMMLER UND VERFAHREN ZUR BEREITSTELLUNG EINES LUFTSAMMLERS MIT EINER WÄRMERÜCKGEWINNUNGSEINHEIT
COLLECTEUR D'AIR ET PROCÉDÉ DE FOURNITURE D'UN COLLECTEUR D'AIR AVEC UNE UNITÉ DE RÉCUPÉRATION DE CHALEUR

(30) Priority: 20.06.2017 DK PA201700368
(43) Date of publication of application: 29.04.2020
(73) Proprietor: Udlejer Hans Jørgen Christensen, 8370 Hadsten (DK)
(72) Inventor: CHRISTENSEN, Hans Jørgen, 8370 Hadsten (DK)
(74) Representative: Patentgruppen A/S
(86) International application number: PCT/DK2018/050148
(87) International publication number: WO 2018/233791

(56) References cited:
- WO-A1-2014/169922
- WO-A1-2016/190754
- WO-A2-2006/102891
- FR-A1- 2 951 472
- US-A- 5 036 906
- US-A1- 2011 114 084
- US-A1- 2013 255 668
- US-A1- 2015 247 652
- DATABASE WPI Section PQ, Week 198636 Thomson Scientific, London, GB; Class Q74, AN 1986-237534 XP002785304, -& SU 1 206 573 A1 (MOSC PLANNING RES) 23 January 1986 (1986-01-23)

## Description

The present invention relates to an air collector for supplying a building or similar structure with solar-heated fresh air according to the introduction of claim 1, and a related method.

### Background

In air collector systems, many situations result in a need to provide a venting of heated rooms in a building, e.g. due to moisture. In winter, a problem is that the sun is not out very much and cold air therefore has to be used for venting. This results in reduced comfort (cold draught) and increased energy consumption.

The object of the invention is to solve this problem.

WO2006/102891 A2 discloses an air collector for supplying a building or similar structure with solar-heated fresh air, according to the preamble of claim 1.

### Brief description of the invention

The invention relates to an air collector for supplying a building or similar structure with solar-heated fresh air. The air collector contains at least one chamber between a transparent cover layer and an absorber, wherein the absorber allows air flow and heat exchange with the radiated solar heat. The air collector also comprises a backing plate, wherein the backing plate and the transparent cover layer are arranged on opposite sides of the air collector, and wherein the air collector comprises a fresh air intake and includes an outlet for the solar-heated fresh air. The fresh air intake is arranged to cover a majority of the backing plate. According to the invention, the air collector also includes one or more air/air heat exchangers with at least one intake and outlet for exhaust air from said building or similar structure to recover and transfer the heat in the exhaust air to the fresh air from the fresh air intake. Furthermore, the air collector comprises means for directing the fresh air from the fresh air intake through the air/air heat exchanger first and then through the absorber.

The invention hereby relates to an air collector with air/air heat exchanger to preheat the fresh, unheated intake air before this is heated by the sun. If there is no sun, the unit works as an ordinary heat recovery unit.

Furthermore, by making the fresh air intake extend across a majority of the backing plate the area of the fresh air intake is increased making it possible to reduce the fresh air flow speed through the air/air heat exchanger and thereby ensured prolonged air travel through the air/air heat exchanger enabling high efficiency and compact design.

The air collector according to the invention thereby achieves a better energy efficiency than standard air collectors.

In a preferred embodiment of the invention, the air collector includes at least one posterior chamber between the backing plate and an absorber, wherein the one or more air/air heat exchangers are integrated in the at least one posterior chamber. This makes it possible to create a compact air collector suitable for supplying a building or similar structure with solar-heated fresh air, and especially if the air/air heat exchanger is designed with a flat structure, so that the air collector maintains a small thickness.

In a first embodiment, the backing plate is provided with perforations, preferably across all or most of the extent of the backing plate. Perforation in the solar collector design ensures that the air flow is distributed evenly throughout the solar collector area and the flow through the absorber is as uniform as possible on each area unit.

In an embodiment, the fresh air intake for the fresh air is located in the one or more air/air heat exchangers.

In another embodiment, the air/air heat exchanger made of a corrosion-resistant material such as plastic or metal.

In a further embodiment, at least two fans drive the air flows, wherein the exhaust air is driven across the encroaching fresh air, so that heat is transferred gradually, e.g. throughout the entire length of the air collector. This advantageously ensures that the exhaust air can be cooled down optimally due to the very long transfer distance made up by the length of the solar collector. The fans can also control the temperature in the air collector and ensure that no places occur in the air collector with too high or too low temperatures, and thereby keep the air collector in an optimum work area, e.g. in freezing temperatures during winter.

It is advantageous to first heat the intake air by means of the exhaust air and then by means of the absorber in that the overall efficiency of the air collector is hereby increased.

In another embodiment, the absorber is air-permeable.

Forming the absorber so that air may pass through it is advantageous in that it increases the area across which the air may enter the chamber between the absorber and the transparent cover layer and thereby ensure a low air flow speed - which entails high efficiency and compact design.

In another embodiment, the outlet for the solar-heated fresh air is arranged adjacent to the intake for exhaust air.

Generally, but particularly when the sun is not shining, and the air collector is working purely as a heat recovery device, it is advantageously to arrange the outlet for the solar-heated fresh air and the intake for exhaust air next to each other in that it enable further and increased heat exchange between the two air flows.

In another embodiment, the air collector comprises means for guiding the fresh air from the fresh air intake from the backing plate and in the direction of the transparent cover layer.

It is advantageous to guide the fresh air transversely across the depth of the air collector in that it hereby is possible to let a large volume of fresh air pass a large area of the air/air heat exchanger slowly - thus, increasing efficiency and/or enabling compact design.

In another embodiment, the at least one intake for exhaust air is located at one end of the air collector and the at least one outlet for exhaust air is located at an opposite end of the air collector.

Arranging the exhaust air intake and outlet at opposite ends of the air collector is advantageous in that it is a simple way of ensuring a long travel through the air/air heat exchanger and in that it enables a simple design.

The invention also relates to a method for providing an air collector for supplying a building or similar structure with solar-heated fresh air through a heat recovery unit, which method comprises the steps of:
installation of one or more air/air heat exchangers including at least one intake and outlet for exhaust air from the building or similar structure, wherein the one or more air/air heat exchangers are located integral in the air collector as heat recovery unit, and
guiding fresh air from a fresh air intake extending across a majority of a backside area of the air collector to the one or more air/air heat exchangers to recover and transfer the heat in the exhaust air to the fresh air from the fresh air intake, wherein fresh air from said fresh air intake is guided through said one or more air/air heat exchangers before being guided through an absorber of said air collector.

In a preferred embodiment of the method of the invention, the one or more air/air heat exchangers are integrated into at least one posterior chamber between a backing plate and absorber in the air collector.

The removal of old exhaust air is performed in a way so that this air is not sucked back into the air collector.

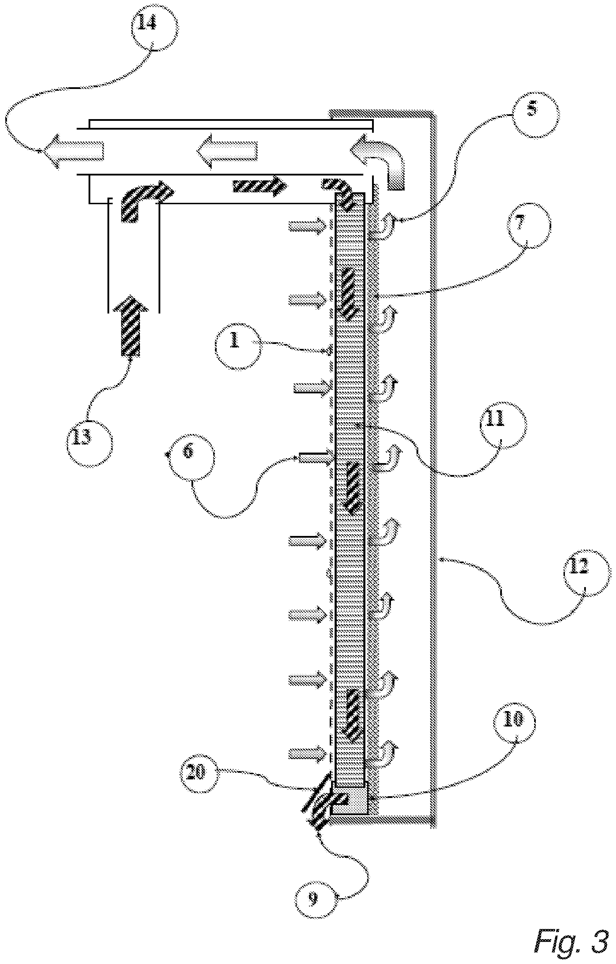

The heating of the colder intake air 6 takes place in two thermally separate processes, namely first using heat exchanger and then by flow through the solar-heated absorber. The direction of movement of the air from 6 to 5 creates the thermal separation (see fig. 3).

The fresh air from the fresh air intake is guided through the one or more air/air heat exchangers before being guided through an absorber of the air collector which is advantageous in that it enables high efficiency and compact design.

### Short description of the drawings

- Figure 1: shows a solar collector with double perforated rear wall as well as the double outlet and intake for air to and from the solar collector.
- Figure 2: shows how the air/air heat exchanger is placed on top of the perforated backing plate. Additionally, the two collecting ducts for the exhaust air are shown. Later, the heat exchanger is covered by the absorber and transparent cover layer.
- Figure 3: shows an entire solar collector in cross section as shown in Figures 1 and 2. This shows an operation of the entire system with the air flow in through the back of the solar collector and past the air/air heat exchanger. During this operating mode, a cold fresh air is heated via the heat exchanger by the warmer exhaust air from the building or similar. The air flow then continues up through the solar collector absorber, which further heats the air when sunlight is present.
- Figure 4: shows the entire system in a typical design with installation on a roof and with piping to different rooms in a building or similar.
- Figure 5: shows a typical way to design the air/air heat exchanger with corrugated plastic or metal pipes. The exchanger is located between the perforated rear wall and an air-permeable absorber in the solar collector. It also shows the principle of the typical air flows in the system.

### Detailed description

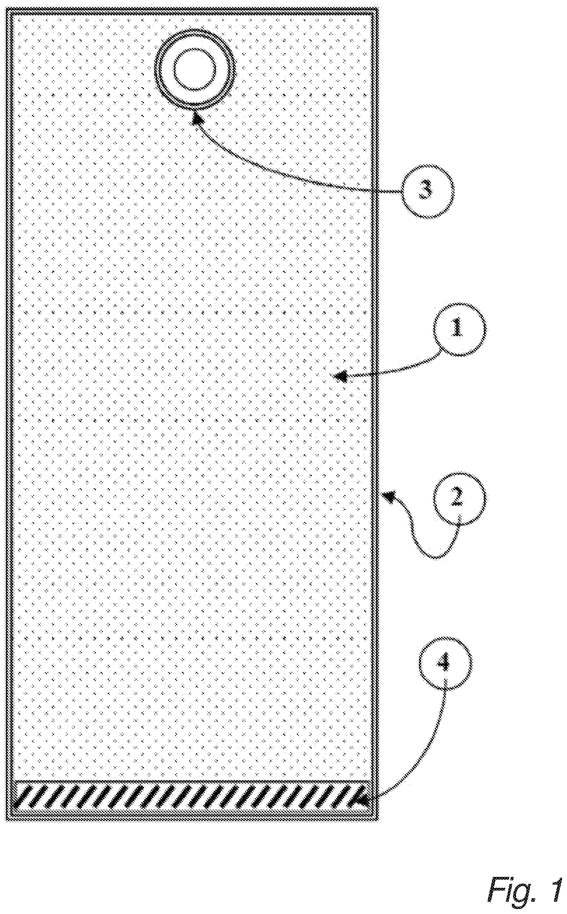

Figure 1 shows the back side of an air collector with backing plate 1 arranged for uniform air intake over substantially the entire surface. In this embodiment the backing plate 1 is formed as a perforated plate but in another embodiment uniform air intake over substantially the entire surface could be enabled by forming the backing plate 1 from a mesh, wire wool, woven or non-woven fibre material, slats or other or any combination thereof.

2 is the solar collector frame profile, and the entire solar collector dimension is typically between 0.5 and 3 metres on the individual sides, but may be changed. 3 shows a typical location of intake and exhaust of air. Here shown as pipe-in-pipe, wherein the inner pipe carries heated, fresh air from the solar collector, and the outer tube contains the exhaust air from the building. 4 shows the location of holes for the exhaust of exhaust air after heat has been transferred to the cold fresh intake air.

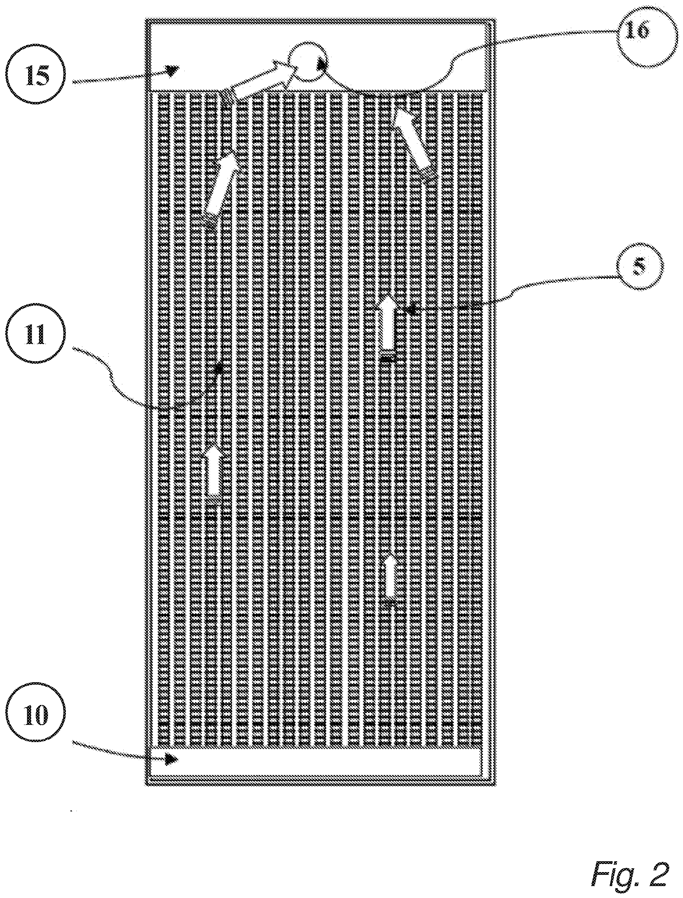

Fig. 2 shows the same air collector seen from the inside, here without absorber and transparent cover layer.

5 shows the direction of movement of the air after having passed the absorber (not shown) towards 16, which is the extraction point for the fresh, heated air, which is then blown into the building. 15 shows the collecting duct for heat exchanger pipes 11, which are again joined in the exhaust collecting duct 10, which conducts the chilled, consumed air out of the back of the solar collector together with condensation water from the exhaust air.

Fig. 3 shows the overall principle for the combined air collector with integrated air/air heat exchanger, seen from the side. 1 is the perforated back side, through which all new, fresh air is sucked in 6 and brushes the heat exchanger surface 11 before being conducted on out through the absorber 7. After heating, the fresh air is conducted in the direction of the arrows 5 before moving on to the injection air nozzles 14 of the building. 20 shows a screen diverting exhaust air away so that it does not mix with the fresh intake air.

In this embodiment the absorber 7 is formed in a porous plastic material, which is black to better absorb the sun radiation energy and convert it to heat, but in another embodiment the absorber 7 could be made from a perforated plate, a mesh, wire wool, woven or non-woven fibre material, slats or other or any material capable of absorbing radiation from the sun and at the same time allow air to pass through it.

The consumed exhaust air from the building is conducted in at arrow 13 and continues through the heat exchanger in the solar collector 11 before being conducted into collecting duct 10 and blown out at openings in the bottom of the solar collector 9. 12 shows the transparent cover layer of the solar collector, preferably having an insulating effect.

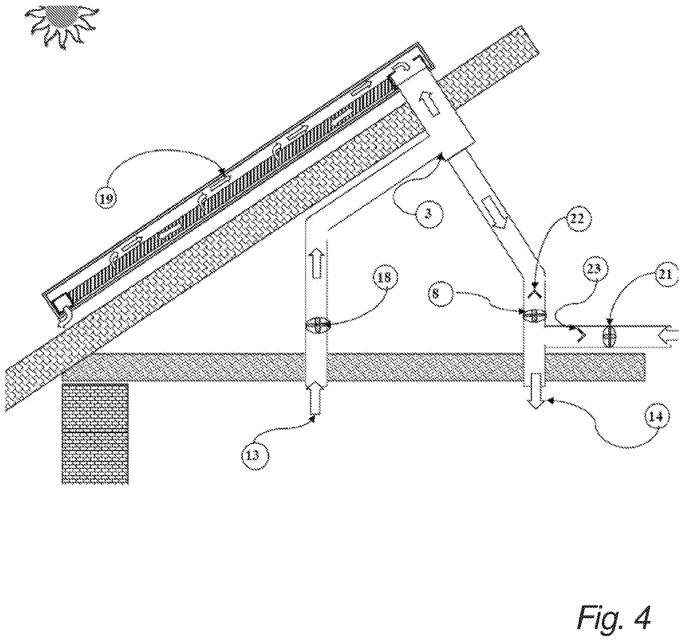

Fig. 4 shows a complete rooftop installation as a principle. 19 shows a solar collector placed on a roof with the double pipe 3 conducting both old exhaust air 13 and new, fresh air 14 through the roof itself. 18 shows the fan sucking the old air out, and 8 shows the fan drawing new, fresh air into the building. Both fans can be controlled independently of each other, depending on the desired operating mode.

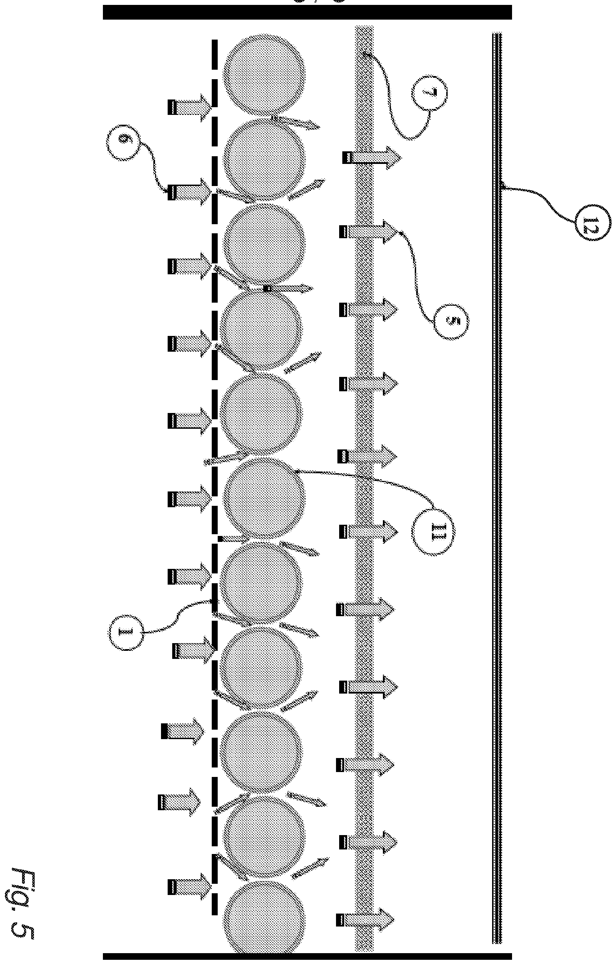

Air intake through the rear wall perforation (shown in Figure 5 with the air flow 11), at the same time as the hot air flow with exhaust air moves from the top down towards the bottom of the solar collector, achieves optimum benefit from both the heat of the exhaust air and the radiated solar heat (the hottest air has the shortest travel in the air collector with the integrated heat recovery unit).

During this operation, heating of the intake air will take place without sun, corresponding to a normal efficient heat recovery system with a minimal heat loss, when the solar collector is provided with an insulating cover layer. The bottom of the solar collector is insulated indirectly through the effect that occurs when the air is pulled through the perforated plate in the back wall.

The heat is concentrated in the upper end of the solar collector, and the exchange of heat between exhaust air and the fresh, cooler intake air takes place gradually across the entire longitudinal direction of the solar collector.

As the exhaust air is hottest at the upper end, the largest heat exchange will take place here, where it is also closest to the opening for injection into a building or similar structure. Contact with a cool cover layer on the solar collector therefore takes place across the smallest possible area. The exhaust air can be cooled down optimally due to the very long transfer distance made up by the length of the solar collector (typically 2-3 metres).

Air intake and outlet from the solar collector can be designed in several ways. It is shown here with a combined pipe-in-pipe system, so that only a single hole needs to be provided in the roof or wall of a building or similar structure.

The invention can be used in numerous places where good fresh air ventilation is desired. This applies to virtually all types of dwellings or institutions, etc. This will vary depending on the purpose and application. The invention can be placed both on a wall and the roof of a building or similar structure, e.g. including said virtually all types of dwellings or institutions, etc.

Condensation water from exhaust air will be conducted out of the solar collector at the bottom along with the consumed air. A guard at this location directs the exhaust air away from the solar collector intake.

As the entire heat exchange takes place on the outside of the building or similar structure, the invention takes up no space inside the structure.

As the invention exploits the materials which already form part of the air collector, the additional price will be very affordable in relation to the significant additional potential yield.

Fig. 5 shows the air travel through the solar collector in more detail. 1 is the perforated back side of the solar collector. 6 shows the direction of air at the intake and passage past the heat exchanger 11, here shown as corrugated tubes which allow air passage even though they are located very close to each other. The air then flows on 5 through absorber 7.

The present invention relates to the use of a (flat) air/air heat exchanger, which is preferably made of a solid plastic material or metal plate, and which can be immediately fitted to or integrated into an existing or new air collector. Typically, the overall thickness of the entire panel is between 50 and 100 mm, but may vary. The invention also relates to running the air flow through the air collector and the added heat exchanger in a manner which ensures that there is no mixing of cold and hot air. Thereby the heat recovery causes no cooling of the heat from the sun.

Both the solar collector perforation 1 and the heat exchanger 11 design must ensure that the air flow is distributed evenly throughout the solar collector area and the flow through the absorber is as uniform as possible on each area unit.

If heat exchanger 11 is made of a material which can e.g. tolerate max.

110 degrees C, the exhaust air fan may be activated and thereby keep the temperature in this exchanger down at an acceptable level. The fresh air fan might for instance be disabled or replaced by another fan which injects cool, fresh air instead.

If it is not desired for extra cold air to be blown in without having been preheated by the exhaust air, fan 8 is disabled, and a fan 21 is activated. A first non-return valve 22 closes, and another non-return valve 23 opens automatically, so that the fresh, cool air is only blown into the dwelling.

The valve arrangement shown consisting of fan 21, first non-return valve 22 and second non-return valve 23 is optional, but advantageous. If it is not included, a supply pipe should not be included either, and so there will only be an unforked outlet pipe on the outlet side of the fan 8.

Ice formation of frozen condensation water in heat exchanger 11 can be prevented by regularly stopping the injection air fan while exhaust air fan continues. In addition, solar radiation on the absorber might contribute to a defrosting if injection fan 14 is switched off. Heat from the absorber will be conveyed to the upper part of the heat exchanger 11 by self-circulation and be transported with the air flow to the lower part thereof.

The air/air heat exchanger is preferably made of a solid plastic material or metal plate, which can be immediately fitted to or integrated into an existing or new air collector, characterized by already having a perforated back side. This perforation consists, for example, of holes with Ø = 1 to 2 mm, and typically spaced apart by 10 to 20 mm.

When air passes through the back side of the air collector, this air is initially forced into connection with the heat exchanger. Then through the air collector absorber.

This heat exchanger is designed, located and operates in a hitherto unseen manner.

### List of drawing references

Fig. 1 - Air collector seen from the rear with
1 = backing plate
2 = solar collector frame
3 = double air lead-through for fresh air into building and old air out, respectively
4 = exhaust holes for old air

Fig. 2 - Air collector seen from above without transparent cover layer and absorber
5 = The arrows show the travel of the fresh air after it has passed the absorber
10 = collecting duct for exhaust air - exhaust
11 = air/air heat exchanger
15 = collecting duct for exhaust air - intake
16 = This is where the hot fresh air is sucked in

Fig. 3 - Air collector in side view = cross-section
1 = backing plate for air intake
5 = heated fresh air movement
6 = cold fresh air intake
7 = absorber for solar energy - air flow through
9 = old air out (along with condensation water)
10 = collecting duct for exhaust air - exhaust
11 = air/air heat exchanger
12 = transparent cover layer
13 = old air from building with moisture into recovery unit
14 = heated fresh air is blown into a building or similar structure

Fig. 4
19 = air collector with heat recovery, e.g. mounted on a wall or roof of a building or similar structure
18 = exhaust air fan
8 = fan for fresh, new air
3 = double air lead-through for fresh air into a building or similar structure and old air out, respectively
13 = old air in from the building or similar structure with moisture
14 = heated fresh air is blown into the building or similar structure

21 = cold fresh air fan
22 = non-return valve that opens when fan (8) is activated and fan (21) is disabled
23 = non-return valve that opens when fan (21) is activated and fan (8) is disabled

Fig. 5
1 = backing plate of air collector
5 = heated air out
6 = cold air is sucked into the solar collector
7 = absorber for solar heating
11 = air/air heat exchanger (pipes)
12 = transparent cover layer

## Claims

1. An air collector (19) for supplying a building or similar structure with solar-heated fresh air, said air collector containing
at least one chamber between a transparent cover layer (12) and an absorber (7), wherein the absorber (7) allows air flow and heat exchange with the radiated solar heat,
a backing plate (1), wherein the backing plate (1) and the transparent cover layer (12) are arranged on opposite sides of the air collector (19),
wherein the air collector comprises a fresh air intake and includes an outlet for the solar-heated fresh air,
wherein the fresh air intake is arranged to cover a majority of the backing plate (1), **characterised in that**,
the air collector also includes one or more air/air heat exchangers (11) with at least one intake and outlet for exhaust air (13) from said building or similar structure to recover and transfer the heat in the exhaust air (13) to the fresh air (6) from the fresh air intake and
wherein the air collector (19) comprises means for directing the fresh air from the fresh air intake through the air/air heat exchanger (11) first and then through the absorber (7).

2. An air collector according to claim 1, 2. wherein the air collector contains at least one posterior chamber between the backing plate (1) and said absorber (7), wherein said one or more air/air heat exchangers (11) are integrated in said at least one posterior chamber.

3. An air collector (19) according to claim 2, wherein the backing plate (1) is provided with perforations, preferably across all or most of the extent of the backing plate.

4. An air collector (19) according to claim 3,
wherein the fresh air intake for the fresh air (6) is located in said one or more air/air heat exchangers (11).

5. An air collector (19) according to any of claims 1 to 4,
wherein the air/air heat exchanger (11) is made of corrosion-resistant material such as plastic or metal.

6. An air collector (19) according to any of claims 1 to 5,
wherein at least two fans (8, 18, 21) drive the air flows, wherein the exhaust air (13) is driven across the encroaching fresh air (6), so that heat is transferred gradually, e.g. throughout the entire length of the air collector.

7. An air collector (19) according to any of the preceding claims, wherein said absorber is air-permeable.

8. An air collector (19) according to any of the preceding claims, wherein said outlet for the solar-heated fresh air is arranged adjacent to said intake for exhaust air (13).

9. An air collector (19) according to any of the preceding claims, wherein said air collector (19) comprises means for guiding said fresh air (6) from the fresh air intake from said backing plate (1) and in the direction of said transparent cover layer (12).

10. An air collector (19) according to any of the preceding claims, wherein said at least one intake for exhaust air (13) is located at one end of said air collector (19) and said at least one outlet for exhaust air (13) is located at an opposite end of said air collector (19).

11. A method for providing an air collector (19) for supplying a building or similar structure with solar-heated fresh air, according to claim 1, through a heat recovery unit, which method comprises the steps of:
installation of one or more air/air heat exchangers (11) including at least one intake and outlet for exhaust air (13) from said building or similar structure, wherein said one or more air/air heat exchangers (11) are located integral in the air collector as a heat recovery unit, and
guiding fresh air from a fresh air intake extending across a majority of a backside area (1) of the air collector (19) to said one or more air/air heat exchangers (11) to recover and transfer the heat in the exhaust air to the fresh air from the fresh air intake, wherein said fresh air from said fresh air intake is guided through said one or more air/air heat exchangers (11) before being guided through an absorber of said air collector (19).

12. The method according to claim
wherein said one or more air/air heat exchangers (11) are integrated into at least one posterior chamber between a backing plate and an absorber in said air collector.

## Patentansprüche

1. Luftsammler (19) zum Versorgen eines Gebäudes oder einer ähnlichen Struktur mit solarbeheizter Frischluft, wobei der Luftsammler enthält
mindestens eine Kammer zwischen einer transparenten Deckschicht (12) und einem Absorber (7), wobei der Absorber (7) Luftstrom und Wärmeaustausch mit der abgestrahlten Sonnenwärme ermöglicht;
eine Trägerplatte (1), wobei die Trägerplatte (1) und die transparente Deckschicht (12) auf gegenüberliegenden Seiten des Luftsammlers (19) angeordnet sind;
wobei der Luftsammler einen Frischlufteinlass umfasst und einen Auslass für die solarbeheizte Frischluft enthält,
wobei der Frischlufteinlass angeordnet ist, um einen Großteil der Trägerplatte (1) zu bedecken,
**dadurch gekennzeichnet, dass**
der Luftsammler auch einen oder mehrere Luft/Luft-Wärmetauscher (11) mit mindestens einem Einlass und Auslass für Abluft (13) aus dem Gebäude oder der ähnlichen Struktur enthält, um die Wärme in der Abluft (13) zurückzugewinnen und an die Frischluft (6) aus dem Frischlufteinlass zu übertragen und wobei der Luftsammler (19) Mittel umfasst, um die Frischluft aus dem Frischlufteinlass zuerst durch den Luft/Luft-Wärmetauscher (11) und dann durch den Absorber (7) zu leiten.

2. Luftsammler nach Anspruch 1, wobei der Luftsammler mindestens eine hintere Kammer zwischen der Trägerplatte (1) und dem Absorber (7) enthält, wobei der eine oder die mehreren Luft/Luft-Wärmetauscher (11) in die mindestens eine hintere Kammer integriert sind.

3. Luftsammler (19) nach Anspruch 2, wobei die Trägerplatte (1) mit Perforationen versehen ist, vorzugsweise über die gesamte oder den größten Teil der Ausdehnung der Trägerplatte.

4. Luftsammler (19) nach Anspruch 3, wobei sich der Frischlufteinlass für die Frischluft (6) in dem einen oder den mehreren Luft/Luft-Wärmetauschern (11) befindet.

5. Luftsammler (19) nach einem der Ansprüche 1 bis 4, wobei der Luft/Luft-Wärmetauscher (11) aus korrosionsbeständigem Material wie Kunststoff oder Metall hergestellt ist.

6. Luftsammler (19) nach einem der Ansprüche 1 bis 5, wobei mindestens zwei Ventilatoren (8, 18, 21) die Luftströme antreiben, wobei die Abluft (13) über die eindringende Frischluft (6) getrieben wird, sodass Wärme allmählich übertragen wird, z. B. über die gesamte Länge des Luftsammlers.

7. Luftsammler (19) nach einem der vorhergehenden Ansprüche, wobei der Absorber luftdurchlässig ist.

8. Luftsammler (19) nach einem der vorhergehenden Ansprüche, wobei der Auslass für die solarbeheizte Frischluft neben dem Einlass für die Abluft (13) angeordnet ist.

9. Luftsammler (19) nach einem der vorhergehenden Ansprüche, wobei der Luftsammler (19) Mittel zum Führen der Frischluft (6) vom Frischlufteinlass von der Trägerplatte (1) und in der Richtung der transparenten Deckschicht (12) umfasst.

10. Luftsammler (19) nach einem der vorhergehenden Ansprüche, wobei sich der mindestens eine Einlass für Abluft (13) an einem Ende des Luftsammlers (19) befindet und sich der mindestens ein Auslass für Abluft (13) an einem gegenüberliegenden Ende des Luftsammlers (19) befindet.

11. Verfahren zum Bereitstellen eines Luftsammlers (19) zum Versorgen eines Gebäudes oder einer ähnlichen Struktur mit solarbeheizter Frischluft nach Anspruch 1, durch eine Wärmerückgewinnungseinheit, wobei das Verfahren die Schritte umfasst von:
Installation eines oder mehrerer Luft/Luft-Wärmetauscher (11), der mindestens einen Einlass und Auslass für Abluft (13) aus dem Gebäude oder der ähnlichen Struktur enthält, wobei sich der eine oder die mehreren Luft/Luft-Wärmetauscher (11) einstückig in dem Luftsammler als eine Wärmerückgewinnungseinheit befinden, und Leiten von Frischluft von einem Frischlufteinlass, der sich über einen Großteil eines Rückseitenbereichs (1) des Luftsammlers (19) erstreckt, zu dem einen oder den mehreren Luft/Luft-Wärmetauschern (11), um die Wärme in der Abluft zurückzugewinnen und an die Frischluft aus dem Frischlufteinlass zu übertragen, wobei die Frischluft aus dem Frischlufteinlass durch den einen oder die mehreren Luft/Luft-Wärmetauscher (11) geführt wird, bevor sie durch einen Absorber des Luftsammlers (19) geleitet wird.

12. Verfahren nach Anspruch 11, wobei der eine oder die mehreren Luft/Luft-Wärmetauscher (11) in mindestens eine hintere Kammer zwischen einer Trägerplatte und einem Absorber in dem Luftsammler integriert sind.

## Revendications

1. Collecteur d'air (19) destiné à alimenter un bâtiment ou une structure similaire en air frais chauffé par énergie solaire, ledit collecteur d'air contenant au moins une chambre entre une couche de couverture transparente (12) et un absorbeur (7), ledit absorbeur (7) permettant un flux d'air et un échange de chaleur avec la chaleur solaire rayonnée,
une plaque de support (1), ladite plaque de support (1) et ladite couche de couverture transparente (12) étant disposées sur des côtés opposés du collecteur d'air (19),
ledit collecteur d'air comprenant une admission d'air frais et comprenant une sortie pour l'air frais chauffé par énergie solaire,
ladite admission d'air frais étant agencée pour recouvrir la majorité de la plaque de support (1),
**caractérisé en ce que** :
le collecteur d'air comprend également un ou plusieurs échangeurs de chaleur air/air (11) avec au moins une admission et une sortie pour l'air d'échappement (13) provenant dudit bâtiment ou d'une structure similaire pour récupérer et transférer la chaleur de l'air d'échappement (13) vers l'air frais (6) provenant de l'admission d'air frais et ledit collecteur d'air (19) comprenant un moyen pour diriger l'air frais de l'admission d'air frais à travers l'échangeur de chaleur air/air (11) d'abord et ensuite à travers l'absorbeur (7).

2. Collecteur d'air selon la revendication 1, ledit collecteur d'air contenant au moins une chambre postérieure entre la plaque de support (1) et ledit absorbeur (7), ledit ou lesdits échangeurs de chaleur air/air (11) étant intégrés dans ladite au moins une chambre postérieure.

3. Collecteur d'air (19) selon la revendication 2, ladite plaque de support (1) étant dotée de perforations, de préférence sur toute ou presque toute l'étendue de la plaque de support.

4. Collecteur d'air (19) selon la revendication 3, ladite admission d'air frais pour l'air frais (6) étant située dans ledit ou lesdits échangeurs de chaleur air/air (11).

5. Collecteur d'air (19) selon l'une quelconque des revendications 1 à 4, ledit échangeur de chaleur air/air (11) étant constitué de matériau résistant à la corrosion tel que du plastique ou du métal.

6. Collecteur d'air (19) selon l'une quelconque des revendications 1 à 5, au moins deux ventilateurs (8, 18, 21) entraînant les flux d'air, ledit air d'échappement (13) étant entraîné à travers l'air frais empiétant (6), afin que la chaleur soit transférée progressivement, par exemple sur toute la longueur du collecteur d'air.

7. Collecteur d'air (19) selon l'une quelconque des revendications précédentes, ledit absorbeur étant perméable à l'air.

8. Collecteur d'air (19) selon l'une quelconque des revendications précédentes, ladite sortie pour l'air frais chauffé par énergie solaire étant agencée adjacente à ladite admission pour l'air d'échappement (13).

9. Collecteur d'air (19) selon l'une quelconque des revendications précédentes, ledit collecteur d'air (19) comprenant un moyen pour guider ledit air frais (6) à partir de l'admission d'air frais à partir de ladite plaque de support (1) et dans la direction de ladite couche de couverture transparente (12).

10. Collecteur d'air (19) selon l'une quelconque des revendications précédentes, ladite au moins une admission pour l'air d'échappement (13) étant située au niveau d'une extrémité dudit collecteur d'air (19) et ladite au moins une sortie pour l'air d'échappement (13) étant située au niveau d'une extrémité opposée dudit collecteur d'air (19).

11. Procédé permettant de fournir un collecteur d'air (19) destiné à alimenter un bâtiment ou une structure similaire en air frais chauffé par énergie solaire, selon la revendication 1, par l'intermédiaire d'une unité de récupération de chaleur, lequel procédé comprend les étapes de :
installation d'un ou plusieurs échangeurs de chaleur air/air (11) comprenant au moins une admission et une sortie pour l'air d'échappement (13) en provenance dudit bâtiment ou d'une structure similaire, ledit ou lesdits échangeurs de chaleur air/air (11) étant situés en tant que partir intégrante dans le collecteur d'air en tant qu'unité de récupération de chaleur, et
guidage de l'air frais à partir d'une admission d'air frais s'étendant sur la majorité d'une zone arrière (1) du collecteur d'air (19) vers ledit ou lesdits échangeurs de chaleur air/air (11) pour récupérer et transférer la chaleur dans l'air d'échappement vers l'air frais provenant de l'admission d'air frais, ledit air frais provenant de ladite admission d'air frais étant guidé à travers ledit ou lesdits échangeurs de chaleur air/air (11) avant d'être guidé à travers un absorbeur dudit collecteur d'air (19).

12. Procédé selon la revendication 11, ledit ou lesdits échangeurs de chaleur air/air (11) étant intégrés dans au moins une chambre postérieure entre une plaque de support et un absorbeur dans ledit collecteur d'air.
